# FASCICULE DE BREVET EUROPEEN

(11) **EP 0 974 423 B1**
(45) Date de publication et mention de la délivrance du brevet: **18.09.2002**
(21) Numéro de dépôt: 99401796.0
(22) Date de dépôt: 16.07.1999
(51) Int. Cl.: B24B 13/01, B24B 45/00, B23B 31/26, B23Q 3/157

(54) **Dispositif d'arrimage entre un dispositif d'entraînement et un outil, notamment un outil de finissage pour lentille ophtalmique, et procédé pour sa mise en oeuvre**
Koppelungsmechanismus zwischen einer Werkzeug-Antriebsvorrichtung und einem Werkzeug, insbesondere für ophtalmische Linse Endbearbeitungswerkzeug, und Verfahren zur Anwendung desselben
Coupling mechanism between a driving device and a tool, especially for an ophtalmic lens finishing tool, and method of using the same

(30) Priorité: 20.07.1998 FR 9809210
(43) Date de publication de la demande: 26.01.2000
(73) Titulaire: ESSILOR INTERNATIONAL Compagnie Générale d'Optique, F-94220 Charenton le Pont (FR)
(72) Inventeur: Cailloux, Jean-Francois, 93340 Le Raincy (FR); Freson, David, 80200 Estrees-Deniecourt (FR)
(74) Mandataire: CABINET BONNET-THIRION

(56) Documents cités:
- GB-A- 2 188 264
- GB-A- 2 253 168
- US-A- 5 220 749

## Description

La présente invention concerne d'une manière générale l'arrimage d'un outil à un dispositif d'entraînement propre à assurer son entraînement en rotation.

Elle vise plus particulièrement, mais non nécessairement exclusivement, le cas où cet outil est un outil de finissage pour lentille ophtalmique.

US 5 220 749 A décrit un dispositif d'arrimage entre un dispositif d'entraînement et un outil d'ébauchage ou de polissage pour prisme optique. Ce dispositif comporte, sur l'outil, un embout de support dont la surface latérale est troncohique et dont l'extrémité libre forme un téton propre à son attelage. Sur le dispositif d'entraînement, le dispositif d'arrimage comporte une broche montée rotative dans une douille fixe, l'extrémité de l'alésage de cette broche étant tronconique afin que l'embout de l'outil puisse se verrouiller dans l'extrémité de l'alésage de la broche par emmanchement conique. Le dispositif d'arrimage comporte également, sur le dispositif d'entraînement, une tige creuse d'attelage, qui, disposée coaxialement dans la broche, est montée mobile axialement dans cette dernière et est équipée, à son extrémité libre, de mâchoires complémentaires du téton situé à l'extrémité libre de l'embout de l'outil ainsi que des moyens de commande, qui, aptes à agir axialement sur la tige d'attelage sont propres à permettre aux mâchoires de la tige de s'engager sur le téton de l'embout de l'outil préalablement mis en place dans le trou tronconique de la broche et à permettre une application l'une contre l'autre des surfaces latérales respectives de l'embout et du trou tronconique.

Il apparaît souhaitable, d'une manière générale, que, pour une réduction des coûts, l'arrimage d'un outil à son dispositif d'entraînement puisse se faire automatiquement, sans l'intervention manuelle d'un quelconque opérateur.

Il est apparu, notamment par le document susmentionné, qu'il était judicieux, pour ce faire, de doter l'outil d'un embout de support équipé de moyens d'intervention propres à son attelage à un quelconque équipement, et, donc, notamment, au dispositif d'entraînement en question.

La présente invention a tout d'abord pour objet un dispositif d'arrimage répondant conjointement au même but ; elle a également pour objet son procédé de mise en oeuvre.

Le dispositif d'arrimage suivant l'invention, entre, donc, un dispositif d'entraînement en rotation et un outil, comporte, sur ledit outil, un embout de support équipé de moyens d'intervention propres à son attelage, et comporte, sur le dispositif d'entraînement, une broche montée rotative dans une douille fixe, une tige d'attelage, qui, disposée coaxialement dans la broche, est montée mobile axialement dans cette broche et est équipée, à son extrémité libre, de moyens d'intervention complémentaires des moyens d'intervention que comporte l'embout de support de l'outil à entraîner, et des moyens de commande, qui, aptes à agir axialement sur la tige d'attelage, sont propres à permettre une application de l'outil à entraîner contre une surface d'appui, ledit dispositif d'arrimage étant d'une manière générale caractérisé en ce que, sur ledit dispositif d'entraînement, il comporte, également, une pièce d'entraînement, qui, solidaire en rotation de la broche et calée axialement sur celle-ci, présente, transversalement, ladite surface d'appui, ladite tige admettant une position déployée, d'attelage, pour laquelle elle est propre à permettre l'attelage de l'outil à entraîner.

Ainsi, suivant l'invention, l'arrimage de l'outil au dispositif d'entraînement se fait en deux temps, à savoir un premier temps, où il y a simplement un attelage de cet outil à la tige d'attelage mise en oeuvre à cet effet, et un deuxième temps où il y a, ensuite, un serrage de cet outil contre la pièce d'entraînement plus précisément prévue pour son entraînement en rotation.

Cette décomposition des fonctions est avantageusement de nature à faciliter chacune d'elles et à les rendre chacune plus efficaces et plus sûres.

Elle facilite en outre l'automatisation recherchée.

De ce point de vue, le procédé de mise en oeuvre suivant l'invention est d'une manière générale caractérisé en ce qu'on présente l'outil à entraîner au droit du dispositif d'entraînement alors même que la tige d'attelage de celui-ci est dans une position déployée, qui est une position d'attelage, en ce qu'on déplace axialement cet outil en direction de cette tige d'attelage jusqu'à pouvoir l'atteler à cette tige d'attelage, et en ce qu'on déplace ensuite cette tige d'attelage en direction d'une position rétractée, qui est sa position normale de repos, jusqu'à ce que l'outil vienne en application contre la surface d'appui de la pièce d'entraînement.

Suivant un développement de l'invention, le mouvement axial de l'outil par rapport à la pièce d'entraînement au cours de la dernière phase de ce procédé est mis à profit pour assurer de manière très simple un centrage convenable de cet outil par rapport à cette pièce d'entraînement, ce qui évite avantageusement d'avoir à en assurer au préalable un positionnement précis par rapport au dispositif d'entraînement.

Enfin, le dispositif d'arrimage suivant l'invention, et son procédé de mise en oeuvre, se satisfont avantageusement de réalisations très diverses pour les moyens d'intervention à prévoir entre l'outil et la tige d'attelage du dispositif d'entraînement.

Suivant une forme préférée de réalisation, ces moyens d'intervention relèvent par exemple d'un simple montage du type montage à baïonnette.

Il suffit, en effet, que la tige d'attelage du dispositif d'entraînement soit également montée mobile en rotation dans la broche qu'elle traverse.

Il en est de même si, en variante, les moyens d'intervention relèvent d'un montage du type à montage à vissage.

Par ailleurs, les moyens de commande de la tige d'attelage du dispositif d'entraînement peuvent eux aussi avantageusement être de réalisations très diverses.

Suivant une forme de réalisation préférée, il s'agit, par exemple, de moyens élastiques qui sollicitent en permanence cette tige d'attelage en direction opposée à la pièce d'attelage qu'elle comporte.

Plus précisément, ces moyens élastiques sont préférentiellement constitués par un empilage de rondelles Belleville.

En effet, un tel empilage de rondelles Belleville permet avantageusement d'obtenir, sous un volume réduit, une charge de serrage importante, garante d'une liaison satisfaisante entre l'outil et la pièce d'entraînement du dispositif d'entraînement.

Les objets de l'invention, ainsi que leurs caractéristiques et leurs avantages, ressortiront d'ailleurs de la description qui va suivre, à titre d'exemple, en référence aux dessins schématiques annexés sur lesquels :
la figure 1 est une vue en coupe axiale du dispositif d'entraînement mettant en oeuvre un dispositif d'arrimage suivant l'invention, pour la position rétractée, de repos, de la tige d'attelage qu'il comporte ;
la figure 2 est une vue partielle de dessous de ce dispositif d'entraînement, suivant la flèche II de la figure 1 ;
la figure 3 est une vue partielle en élévation de sa tige d'attelage, avec la pièce d'attelage prévue en bout de celle-ci ;
la figure 4 est une vue en perspective d'un outil à arrimer au dispositif d'entraînement ;
la figure 5 est une vue en coupe axiale de cet outil, suivant la ligne V-V de la figure 4 ;
la figure 6 est une vue en coupe axiale, qui, reprenant celles des figures 1 et 5, illustrent la présentation de l'outil au droit du dispositif d'entraînement, alors même que la tige d'attelage de celui-ci est en position déployée d'attelage ;
la figure 7 est une vue en coupe axiale de l'ensemble, après l'arrimage de l'outil au dispositif d'entraînement ;
la figure 8 est une autre vue partielle en coupe axiale de cet ensemble, suivant la ligne VIII-VIII de la figure 7 ;
la figure 9 en est, à échelle supérieure, une autre vue partielle en coupe, suivant la ligne IX-IX de la figure 7 ;
la figure 10 en est, à l'échelle de celle de la figure 9, une autre vue partielle en coupe, suivant la ligne X-X de la figure 8.

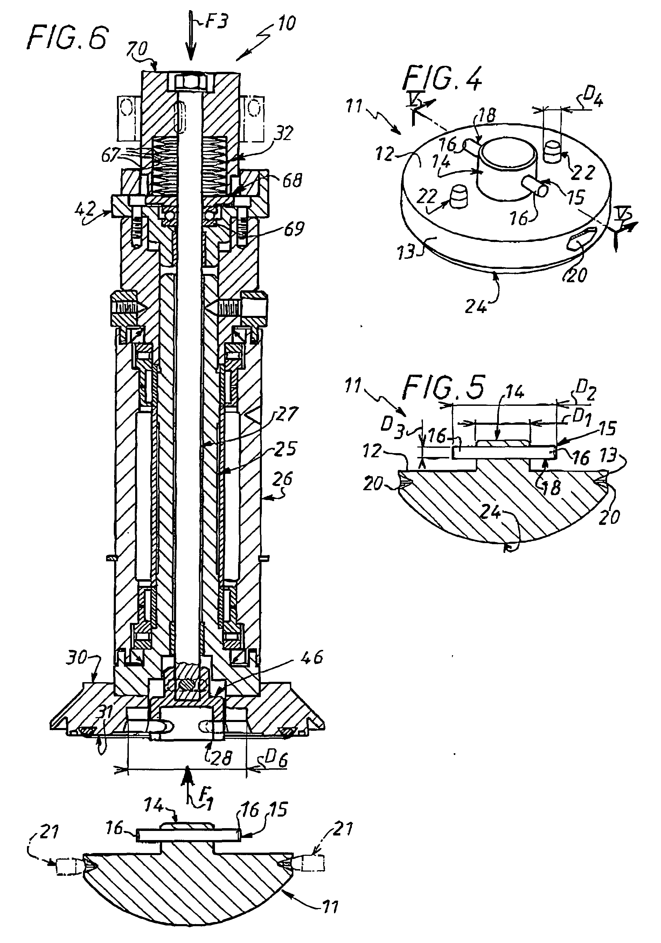

Tel qu'illustré sur ces figures, le dispositif d'entraînement 10 est destiné à assurer l'entraînement en rotation d'un outil 11 du type de celui représenté sur les figures 4 et 5.

Cet outil 11 est, par exemple, un outil de finissage pour lentille ophtalmique.

Ne faisant pas, en soi, l'objet de la présente invention, il ne sera pas décrit en détail ici.

Il suffira, pour l'essentiel, d'indiquer qu'il comporte, en saillie sur sa surface supérieure 12, en retrait par rapport à sa surface latérale 13, un embout de support 14 équipé de moyens d'intervention 15 propres à son attelage à un quelconque équipement, et, en particulier, ainsi qu'il apparaîtra ci-après, au dispositif d'entraînement 10.

Dans la forme de réalisation représentée, ces moyens d'intervention 15 sont constitués par deux ergots 16, qui font saillie latéralement dos à dos sur l'embout de support 14, et qui sont ainsi propres à un montage du type montage à baïonnette.

Par exemple, et tel que représenté, les deux ergots 16 sont formés par les extrémités d'une même goupille 18 qui traverse de part en part l'embout de support 14.

Soit D₁ le diamètre de l'embout de support 14, et D₂, supérieure à D₁, la distance séparant l'une de l'autre les extrémités des ergots 16.

Soit, corollairement, D₃ le diamètre de la goupille 18, et, donc, celui des ergots 16.

Dans la forme de réalisation représentée, l'outil 11 comporte, par ailleurs, en creux sur sa surface latérale 13, et en positions diamétralement opposées l'une par rapport à l'autre, deux encoches 20, dites ci-après, par simple commodité, encoches de préhension.

Tel que schématisé en traits interrompus sur la figure 6, ces encoches de préhension 20 sont propres à une saisie de l'outil 11 par les doigts 21 d'un quelconque dispositif de transfert non représenté.

Par exemple, et tel que représenté, les encoches de préhension 20 s'étendent dans le même plan axial que les ergots 16.

Enfin, dans l'exemple de réalisation représenté, l'outil 11 comporte, en saillie sur sa surface supérieure 12, à distance de l'embout de support 14, et, donc, en position excentrée par rapport à celui-ci, au moins un téton 22.

Par exemple, et tel que représenté, deux tétons 22 sont prévus, en positions diamétralement opposées l'un par rapport à l'autre.

Dans la forme de réalisation représentée, ces tétons 22 sont en croix par rapport aux encoches de préhension 20, et, donc, par rapport aux ergots 16.

Il s'agit, globalement, de fûts cylindriques, dont l'arête supérieure est abattue par un chanfrein tronconique.

Soit D₄ leur diamètre.

En pratique, seule la surface inférieure 24 de l'outil 11 constitue une surface de travail pour celui-ci.

Par exemple, et tel que représenté, il s'agit d'une surface convexe.

Mais, en variante, il pourrait tout aussi bien s'agir d'une surface concave.

De manière connue en soi, le dispositif d'entraînement 10 comporte une broche 25 montée rotative dans une douille fixe 26.

Suivant l'invention, il comporte, également, une tige d'attelage 27, qui, disposée coaxialement dans la broche 25, est montée mobile axialement dans cette broche 25 et est équipée, à son extrémité libre, suivant des dispositions décrites plus en détail ultérieurement, de moyens d'intervention 28 complémentaires des moyens d'intervention 15 que comporte l'embout de support 14 de l'outil 11 à entraîner, une pièce d'entraînement 30, qui, solidaire en rotation de la broche 25 et calée axialement sur celle-ci, présente, transversalement, une surface d'appui 31, et, suivant des dispositions également décrites plus en détail ultérieurement, des moyens de commande 32, qui, aptes à agir axialement sur la tige d'attelage 27, sont propres à permettre une application de l'outil 11 à entraîner contre la surface d'appui 31 de la pièce d'entraînement 30.

En pratique, la douille fixe 26 est portée par un bras, non représenté.

En pratique, également; la broche 25 est en deux parties, à savoir une partie inférieure 25A et une partie supérieure 25B, qui, par des épaulements transversaux 34A, 34B, enserrent, axialement, par l'intermédiaire de moyens de roulement 35A, 35B, la douille fixe 26, et qui sont dûment solidarisées l'une à l'autre.

Par exemple, et tel que représenté, ces deux parties 25A, 25B sont emmanchées axialement l'une dans l'autre, et une vis pointeau 36, au moins, les bloque axialement l'une par rapport à l'autre.

La partie inférieure 25A porte la pièce d'entraînement 30.

Par exemple, cette pièce d'entraînement 30 est rapportée, par exemple à l'aide de vis non visibles sur les figures, sur un épanouissement 37 prévu à cet effet à l'extrémité correspondante de cette partie inférieure 25A.

La partie supérieure 25B forme, elle-même, à son extrémité opposée, un épanouissement 38, et elle est solidaire en rotation de moyens d'entraînement 40 propres à son entraînement en rotation.

Par exemple, ces moyens d'entraînement 40 sont constitués par une couronne dentée, qui, coaxiale de cette partie supérieure 25B de la broche 25, à la base de l'épanouissement 38 de celle-ci, est dûment calée en rotation de place en place sur cette partie supérieure 25B, par exemple par des vis pointeau 41.

Dans la forme de réalisation représentée, un chapeau 42, qui est traversé par la tige d'attelage 27, est en outre rapporté, transversalement, par des vis 43, en bout de la partie supérieure 25B de la broche 25, sur la surface supérieure de celle-ci.

Bien entendu les moyens de roulement 35A, 35B prévus entre la broche 25 et la douille fixe 26 sont aptes à intervenir tant radialement qu'axialement.

Bien entendu, également, il est prévu, outre ces moyens de roulement 35A, 35B, entre la broche 25 et la douille fixe 26, des joints d'étanchéité 44A, 44B.

Les dispositions correspondantes relevant de l'homme de métier, elles ne seront pas décrites plus en détail ici.

En pratique, l'extrémité libre de la tige d'attelage 27 intervient du côté de la partie inférieure 25A de la broche 25.

Lorsque, comme représenté, les moyens d'intervention 15 que comporte l'embout de support 14 de l'outil 11 à entraîner sont constitués par deux ergots 16 propres à un montage du type montage à baïonnette, les moyens d'intervention 28 équipant de manière complémentaire cette tige d'attelage 27 sont constitués par une pièce d'attelage 46, en forme de cloche, par laquelle cette tige d'attelage 27 est adaptée à être engagée sur l'embout de support 14 de l'outil 11 à entraîner, et qui présente, latéralement, des rainures en baïonnette 47, pour coopération avec les ergots 16 que comporte cet embout de support 14.

Par "rainures en baïonnette 47", on entend, ici, de manière usuelle, des rainures qui comportent, successivement, un tronçon 48, qui s'étend sensiblement axialement, et qui débouche sur la tranche de la pièce d'attelage 46, et un tronçon 49, qui s'étend sensiblement transversalement, et qui comporte, intérieurement, à distance de son extrémité borgne, une saillie d'arrêt 50.

Par exemple, et tel que représenté, la pièce d'attelage 46 présente, en saillie sur sa surface supérieure 52, un embout tubulaire 53 par lequel elle est rapportée sur la tige d'attelage 27, en étant dûment solidarisée à celle-ci, par exemple par une goupille 54.

Dans la forme de réalisation représentée, la surface d'appui 31 de la pièce d'entraînement 30 s'étend transversalement, sensiblement perpendiculairement à l'axe A de l'ensemble.

Pour les ergots 16 de l'embout de support 14 de l'outil 11 à entraîner, la pièce d'entraînement 30 présente, en creux sur sa surface d'appui 31, une saignée 55, qui s'étend suivant un diamètre de part et d'autre de l'axe A de l'ensemble.

Préférentiellement, cette saignée 55 débouche sur la surface d'appui 31 par un divergent 56.

Mais, pour le reste, sa dimension transversale D₅ est sensiblement égale au diamètre D₃ des ergots 16, tout en étant légèrement supérieure à ce diamètre D₃.

De même, sa dimension longitudinale D₆ est légèrement supérieure à la distance D₂ séparant l'une de l'autre les extrémités dès ergots 16 de l'outil 11.

L'outil 11 à entraîner comportant au moins un téton 22, la pièce d'entraînement 30 comporte, en creux sur sa surface d'appui 31, et en position excentrée, au moins un perçage 58, qui, allongé parallèlement à l'axe A de l'ensemble, est propre à l'engagement d'un tel téton 22.

Dans la forme de réalisation représentée, la pièce d'entraînement 30 comporte, donc, deux perçages 58, qui, disposés suivant un même diamètre, s'étendent chacun respectivement de part et d'autre de l'axe A de l'ensemble, à égale distance de celui-ci.

En pratique, ces perçages 58 sont disposés suivant un diamètre perpendiculaire à celui suivant lequel s'étend la saignée 55.

En outre, ils sont chacun allongés en boutonnière suivant le diamètre suivant lequel ils sont disposés.

Mais, transversalement, ils ont une dimension D₇ qui est sensiblement égale au diamètre D₄ des tétons 22, tout en étant légèrement supérieure à ce diamètre D₄.

Dans la forme de réalisation représentée, la pièce d'entraînement 30 présente, encore, en creux sur sa surface d'appui 31, un dégagement 59 dans le contour duquel s'inscrivent tant la saignée 55 que le perçage 58.

Par exemple, et tel que représenté, le contour de ce dégagement 59 est circulaire.

La pièce d'entraînement 30 présente, enfin, en creux sur sa surface d'appui 31, au voisinage de sa périphérie, et, donc, au-delà du dégagement 59, une gorge 60, qui s'étend annulairement autour de l'axe A de l'ensemble, et dans laquelle est logé un joint d'étanchéité 62.

En pratique, dans la forme de réalisation représentée, la pièce d'entraînement 30 est une pièce annulaire, et, par son évidement central 63, elle est propre à un engagement axial au moins partiel de l'embout de support 14 de l'outil 11 à entraîner.

Plus précisément, lorsque, comme en l'espèce, la tige d'attelage 27 porte une pièce d'attelage 46 dans laquelle cet embout de support 14 doit être engagé axialement, la pièce d'entraînement 30 entoure cette pièce d'attelage 46.

Conjointement, l'évidement central 63 de la pièce d'entraînement 30 recoupe sa saignée 55.

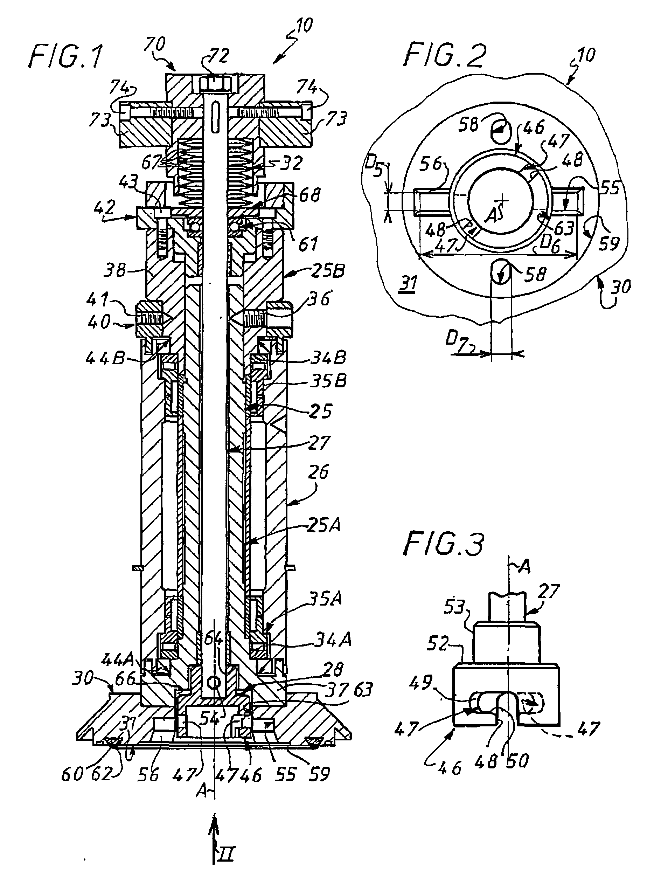

Dans la forme de réalisation représentée, la tige d'attelage 27 est montée mobile axialement entre une position rétractée, de repos, qui est celle représentée sur la figure 1, et pour laquelle elle est en butée, directement ou indirectement, contre un épaulement 64 de la broche 25, et une position déployée, d'attelage, qui est celle représentée sur la figure 6, et pour laquelle elle est propre à permettre l'attelage de l'outil 11 à entraîner.

Par exemple l'épaulement 64 de la broche 25 est un épaulement transversal prévu intérieurement sur la partie inférieure 25A de cette broche 25, au niveau de l'épanouissement 37 de celle-ci, et, en position rétractée de repos, la tige d'attelage 27 est en butée sur cet épaulement 64 par l'intermédiaire de la tranche de l'embout tubulaire 53 de la pièce d'attelage 46 qu'elle porte.

En pratique, pour la position rétractée, de repos, de la tige d'attelage 27, la pièce d'attelage 46 est totalement escamotée dans le dispositif d'entraînement 10, à la faveur de l'évidement central 63 de la pièce d'entraînement 30 et d'un dégagement 66, qui, prévu à cet effet en creux sur la surface inférieure de la broche 25, et, plus précisément, sur la surface inférieure de l'épanouissement 37 de la partie inférieure 25A de cette broche 25, s'étend dans le prolongement de l'évidement central 63 de la pièce d'entraînement 30.

En revanche, pour la position déployée, d'attelage, de la tige d'attelage 27, et tel que représenté sur la figure 6, la pièce d'attelage 46 portée par cette tige d'attelage 27 fait saillie au-delà de la surface d'appui 31 de la pièce d'entraînement 30.

Suivant les nécessités, la saillie correspondante peut être plus ou moins accentuée.

Dans la forme de réalisation représentée, elle est cependant relativement minime.

Dans la forme de réalisation représentée, les moyens de commande 32 de la tige d'attelage 27 sont des moyens élastiques qui sollicitent en permanence cette tige d'attelage 27 en direction opposée à la pièce d'attelage 46 qu'elle porte.

Par exemple, et tel que représenté, ces moyens élastiques sont constitués par un empilage de rondelles Belleville 67, et ils interviennent entre, d'une part, une rondelle 68, qui, par l'intermédiaire d'un roulement 69, prend appui axialement sur le chapeau 42 rapporté sur la partie supérieure 25B de la broche 25, et, d'autre part, une noix 70, qui, rapportée à cet effet sur la tige d'attelage 27, est dûment calée sur celle-ci, tant axialement qu'en rotation.

Par exemple, pour le calage axial de la noix 70, l'extrémité correspondante de la tige d'attelage 27 peut être filetée, pour la mise en oeuvre d'un écrou 72.

En variante, cet écrou 72 peut faire partie intégrante de la tige d'attelage 27, en formant alors par lui-même une tête pour celle-ci.

Corollairement, pour le calage en rotation de la noix 70, il peut être prévu, entre cette noix 70 et la tige d'attelage 27, une quelconque goupille, non visible sur les figures.

Dans la forme de réalisation représentée, la tige d'attelage 27 est montée mobile dans la broche 25 tant axialement qu'en rotation.

Pour ce faire, elle est soumise à des bras de commande 73 par lesquels il est possible d'agir en rotation sur elle.

Par exemple, et tel que représenté, ces bras de commande 73 sont rapportés sur la noix 70, à l'aide de vis 74.

Bien entendu, ils peuvent être remplacés par une couronne.

Pour la mise en oeuvre du dispositif d'arrimage 10 suivant l'invention, il peut, par exemple, être procédé comme suit.

Dans un premier temps, figure 6, on présente l'outil 11 à entraîner au droit du dispositif d'entraînement 10 alors même que la tige d'attelage 27 de celui-ci est en position déployée d'attelage.

Dans un deuxième temps, et tel que schématisé par une flèche F₁ sur la figure 6, on déplace axialement l'outil 11 en direction de la tige d'attelage 27, jusqu'à pouvoir l'atteler à cette tige d'attelage 27.

En pratique, lorsque, comme en l'espèce, est prévu un montage à baïonnette entre la tige d'attelage 27 et l'outil 11 à entraîner, on assure une rotation de cette tige d'attelage 27 autour de l'axe A de l'ensemble, tant préalablement au déplacement axial de l'outil 11, pour que, tel que représenté, le tronçon axial 48 des rainures à baïonnette 47 de la pièce d'attelage 46 qu'elle porte soit à l'aplomb des ergots 16 de l'outil 11, que postérieurement à ce déplacement axial, pour que, par le tronçon transversal 49 de ces rainures à baïonnette 47, la pièce d'attelage 46 s'engage sur ces ergots 16.

Par exemple, les deux rotations ainsi appliquées successivement à la tige d'attelage 27 sont effectuées en sens inverses l'une par rapport à l'autre.

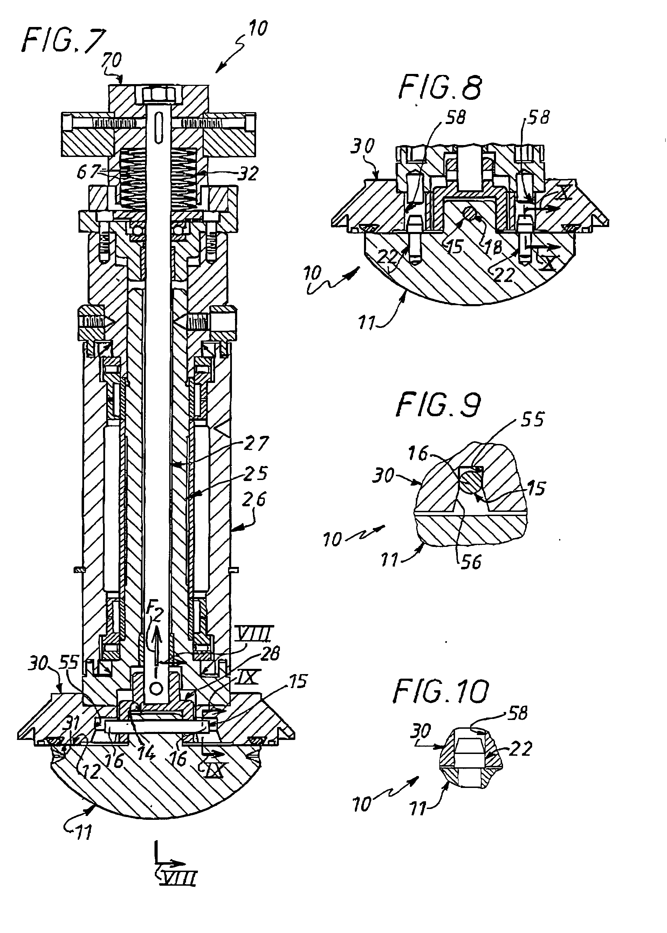

Enfin, dans un troisième temps, et tel que schématisé par une flèche F₂ sur la figure 7, on déplace la tige d'attelage 27 en direction de sa position rétractée jusqu'à ce que, par sa surface supérieure 12, l'outil 11 vienne en application contre la surface d'appui 31 de la pièce d'entraînement 30, tel que représenté sur la figure 7.

Ce faisant, les ergots 16 de l'outil 11 s'engagent dans la saignée 55 de la pièce d'entraînement 30, et, corollairement, ses tétons 22 pénètrent dans les perçages 58 de celle-ci, ce qui assure, très simplement, le centrage de l'outil 11 par rapport à la pièce d'entraînement 30 suivant deux directions perpendiculaires, à savoir une direction correspondant au diamètre suivant lequel s'étend la saignée 55, et une direction correspondant au diamètre suivant lequel sont disposés les perçages 58.

Corollairement, le joint d'étanchéité 62 se trouve sous contrainte.

Lorsque, comme en l'espèce, les moyens de commande 32 de la tige d'attelage 27 sont des moyens élastiques, on exerce axialement une force sur cette tige d'attelage 27 pour son passage de sa position rétractée à sa position déployée, en agissant en pratique pour ce faire sur la noix 70, tel que schématisé par une flèche F₃ sur la figure 6, et on relâche ensuite cette force après l'attelage de l'outil 11 à entraîner.

Ainsi, le serrage de l'outil 11 contre la pièce d'entraînement 30 est assuré par ces seuls moyens élastiques, en l'espèce l'empilage de rondelles Belleville 67.

Lors de la rotation de la broche 25, l'entraînement de l'outil 11 se fait pour l'essentiel par les tétons 22.

Mais le serrage de cet outil 11 contre la surface d'appui 31 de la pièce d'entraînement 30 y participe également.

Ainsi qu'il est aisé de le comprendre, toutes les opérations correspondantes sont aisées à automatiser.

Bien entendu, la présente invention ne se limite pas à la forme de réalisation décrite et représentée, mais englobe toute variante d'exécution.

En particulier, les ergots et rainures assurant un montage à baïonnette entre l'outil et la tige d'attelage du dispositif d'entraînement pourraient être inversés de cet outil à cette tige d'attelage.

En outre, les moyens d'intervention correspondants pourraient tout aussi bien être remplacés par des moyens d'intervention différents, qui, du point de vue de l'attelage à assurer, seraient techniquement équivalents, tels que, par exemple, des moyens de vissage, l'extrémité de la tige d'attelage étant par exemple filetée, et l'embout de support de l'outil présentant alors en correspondance un perçage taraudé.

Enfin, tous les déplacements axiaux de l'outil par rapport au dispositif d'entraînement doivent être entendus comme étant des déplacements relatifs pouvant aussi bien faire intervenir le dispositif d'entraînement lui-même plutôt que l'outil.

## Revendications

1. Dispositif d'arrimage entre un dispositif d'entraînement et un outil (11), lequel dispositif d'arrimage comporte, sur ledit outil, un embout de support (14) équipé de moyens d'intervention (15) propres à son attelage, et comporte, sur le dispositif d'entraînement, une broche (25) montée rotative dans une douille fixe (26), une tige d'attelage (27), qui, disposée coaxialement dans la broche (25), est montée mobile axialement dans cette broche (25) et est équipée, à son extrémité libre, de moyens d'intervention (28) complémentaires des moyens d'intervention (15) que comporte l'embout de support (14) de l'outil (11) à entraîner, et des moyens de commande (32), qui, aptes à agir axialement sur la tige d'attelage (27), sont propres à permettre une application de l'outil (11) à entraîner contre une surface d'appui (31), ledit dispositif d'arrimage étant d'une manière générale **caractérisé en ce que**, sur ledit dispositif d'entraînement, il comporte, également, une pièce d'entraînement (30), qui, solidaire en rotation de la broche (25) et calée axialement sur celle-ci, présente, transversalement, ladite surface d'appui (31), ladite tige admettant une position déployée, d'attelage, pour laquelle elle est propre à permettre l'attelage de l'outil (11) à entraîner.

2. Dispositif suivant la revendication 1, **caractérisé en ce que**, les moyens d'intervention (15) que comporte l'embout de support (14) de l'outil (11) à entraîner étant constitués par deux ergots (16), qui font saillie latéralement dos à dos sur cet embout de support (14), et qui sont ainsi propres à un montage du type montage à baïonnette, les moyens d'intervention (28) équipant la tige d'attelage (27) sont constitués par une pièce d'attelage (46), en forme de cloche, par laquelle cette tige d'attelage (27) est adaptée à être engagée sur l'embout de support (14) de l'outil (11) à entraîner, et qui présente, latéralement, des rainures en baïonnette (47), pour coopération avec les ergots (16) que comporte cet embout de support (14).

3. Dispositif suivant la revendication 2, **caractérisé en ce que** la pièce d'entraînement (30) présente, en creux sur sa surface d'appui (31), une saignée (55), qui s'étend suivant un diamètre de part et d'autre de l'axe (A) de l'ensemble.

4. Dispositif suivant la revendication 3, **caractérisé en ce que** la saignée (55) débouche sur la surface d'appui (31) par un divergent (56).

5. Dispositif suivant l'une quelconque des revendications 1 à 4, **caractérisé en ce que** la pièce d'entraînement (30) comporte, en creux sur sa surface d'appui (31), et en position excentrée, au moins un perçage (58).

6. Dispositif suivant la revendication 5, **caractérisé en ce que** la pièce d'entraînement (30) comporte deux perçages (58), qui, disposés suivant un même diamètre, s'étendent chacun respectivement de part et d'autre de l'axe (A) de l'ensemble, à égale distance de celui-ci.

7. Dispositif suivant la revendication 6, **caractérisé en ce que** les perçages (58) sont chacun allongés en boutonnière suivant le diamètre suivant lequel ils sont disposés.

8. Dispositif suivant l'une quelconque des revendications 5 à 7, **caractérisé en ce que** les perçages (58) sont disposés suivant un diamètre perpendiculaire à celui suivant lequel s'étend la saignée (55).

9. Dispositif suivant les revendications 3 et 6, prises conjointement, **caractérisé en ce que** la pièce d'entraînement (30) présente, en creux sur sa surface d'appui (31), un dégagement (59) dans le contour duquel s'inscrivent tant la saignée (55) que les perçages (58).

10. Dispositif suivant l'une quelconque des revendications 1 à 9, **caractérisé en ce que** la pièce d'entraînement (30) présente, en creux sur sa surface d'appui (31), au voisinage de sa périphérie, une gorge (60), qui s'étend annulairement autour de l'axe (A) de l'ensemble, et dans laquelle est logé un joint d'étanchéité (62).

11. Dispositif suivant l'une quelconque des revendications 1 à 10, **caractérisé en ce que** la pièce d'entraînement (30) est une pièce annulaire, et, par son évidement central (63), elle est propre à un engagement axial au moins partiel de l'embout de support (14) de l'outil (11) à entraîner.

12. Dispositif suivant les revendications 2 et 11, prises conjointement, **caractérisé en ce que** la pièce d'entraînement (30) entoure la pièce d'attelage (46).

13. Dispositif suivant les revendications 3 et 11, prises conjointement, **caractérisé en ce que** l'évidement central (63) de la pièce d'entraînement (30) recoupe sa saignée (55).

14. Dispositif suivant l'une quelconque des revendications 1 à 13, **caractérisé en ce que** la tige d'attelage (27) est montée mobile axialement entre une position rétractée, de repos, pour laquelle elle est en butée contre un épaulement (64) de la broche (25), et ladite position déployée, d'attelage.

15. Dispositif d'entraînement suivant l'une quelconque des revendications 1 à 14, **caractérisé en ce que**, pour la position déployée, d'attelage, de la tige d'attelage (27), une pièce d'attelage (46), portée par cette tige d'attelage (27) et constituant les moyens d'intervention (28) équipant la tige d'attelage (27), fait saillie au-delà de la surface d'appui (31) de la pièce d'entraînement (30).

16. Dispositif suivant l'une quelconque des revendications 1 à 15, **caractérisé en ce que** les moyens de commande (32) de la tige d'attelage (27) sont des moyens élastiques qui sollicitent en permanence cette tige d'attelage (27) en direction opposée à la pièce d'attelage (46) qu'elle porte.

17. Dispositif suivant la revendication 16, **caractérisé en ce que** les moyens élastiques formant les moyens de commande (32) de la tige d'attelage (27) sont constitués par un empilage de rondelles Belleville (67).

18. Dispositif suivant l'une quelconque des revendications 1 à 17, **caractérisé en ce que** la tige d'attelage (27) est montée mobile dans la broche (25) tant axialement qu'en rotation.

19. Procédé pour la mise en oeuvre d'un dispositif (10) conforme à l'une quelconque des revendications 1 à 18, caractérisé en qu'on présente l'outil (11) à entraîner au droit du dispositif d'entraînement (10) alors même que la tige d'attelage (27) de celui-ci est en position déployée, en ce qu'on déplace axialement cet outil (11) en direction de cette tige d'attelage (27) jusqu'à pouvoir l'atteler à cette tige d'attelage (27), et en ce qu'on déplace cette tige d'attelage (27) en direction de sa position rétractée jusqu'à ce que l'outil (11) vienne en application contre la surface d'appui (31) de la pièce d'entraînement (30).

20. Procédé suivant la revendication 19, **caractérisé en ce que**, un montage à baïonnette étant prévu entre la tige d'attelage (27) et l'outil (11) à entraîner, on assure une rotation de cette tige d'attelage (27) autour de l'axe (A) de l'ensemble, tant préalablement au déplacement axial de l'outil (11) que postérieurement à ce déplacement axial.

21. Procédé suivant l'une quelconque des revendications 19, 20, **caractérisé en ce que**, les moyens de commande (32) de la tige d'attelage (27) étant des moyens élastiques, on exerce axialement une force sur cette tige d'attelage (27) pour son passage de sa position rétractée à sa position déployée, et on relâche cette force après l'attelage de l'outil (11) à entraîner.

## Claims

1. A fixing device between a drive device and a tool (11), which fixing device comprises on said tool a support connecting portion (14) equipped with operational means (15) for coupling thereof, and comprises on said drive device a spindle (25) mounted rotatably in a fixed sleeve (26), a coupling rod (27) which, disposed coaxially in the spindle (25), is mounted movably axially in said spindle (25) and is provided at its free end with operational means (28) complementary to the operational means (15) that the support connecting portion (14) of the tool (11) to be driven comprises, and control means (32) which, being capable of acting axially on the coupling rod (27), are capable of permitting the tool (11) which is to be driven to be applied against a support surface (31), said fixing device being generally **characterised in that**, on said drive device, it also comprises a drive portion (30) which, being fixed in respect of rotation to the spindle (25) and secured axially thereon, transversely has said support surface (31), said rod allowing a deployed coupling position in which it is capable of permitting coupling of the tool (11) to be driven.

2. A device according to claim 1 **characterised in that**, the operational means (15) that the support connecting portion (14) of the tool (11) to be driven comprises being formed by two lugs (16) which project laterally in back-to-back relationship on said support connecting portion (14) and which are thus suitable for assembly of the bayonet type, the operational means (28) equipping the coupling rod (27) are formed by a bell-shaped coupling portion (46), by way of which said coupling rod (27) is adapted to be engaged on the support connecting portion (14) of the tool (11) to be driven and which laterally has bayonet grooves (47) for co-operating with the lugs (16) that said support connecting portion (14) comprises.

3. A device according to claim 2 **characterised in that** the drive portion (30) comprises, in recessed relationship on its support surface (31), a groove (55) which extends along a diameter on respective sides of the axis (A) of the assembly.

4. A device according to claim 3 **characterised in that** the groove (55) opens to the support surface (31) by way of a divergent portion (56).

5. A device according to any one of claims 1 to 4 **characterised in that** the drive portion (30) comprises, in recessed relationship on its support surface (31) and in an eccentric position, at least one opening (58).

6. A device according to claim 5 **characterised in that** the drive portion (30) comprises two openings (58) which, disposed on the same diameter, each extend on respective sides of the axis (A) of the assembly at an equal distance therefrom.

7. A device according to claim 6 **characterised in that** the openings (58) are each elongated in a buttonhole shape along the diameter along which they are disposed.

8. A device according to any one of claims 5 to 7 **characterised in that** the openings (58) are disposed along a diameter perpendicular to that along which the groove (55) extends.

9. A device according to claims 3 and 6 in combination **characterised in that** the drive portion (30) has in recessed relationship on its support surface (31) a recess (56), within the contour of which are inscribed both the groove (55) and the openings (58).

10. A device according to any one of claims 1 to 9 **characterised in that** the drive portion (30) comprises in recessed relationship on its support surface (31) in the vicinity of its periphery a channel (60) which extends annularly around the axis (A) of the assembly and in which a sealing joint (62) is accommodated.

11. A device according to any one of claims 1 to 10 **characterised in that** the drive portion (30) is an annular portion and, by way of its central recess (63), it is suitable for at least partial axial engagement of the support connecting portion (14) of the tool (11) to be driven.

12. A device according to claims 2 and 11 in combination **characterised in that** the drive portion (30) surrounds the coupling portion (46).

13. A device according to claims 3 and 11 in combination **characterised in that** the central recess (63) in the drive portion (30) intersects its groove (55).

14. A device according to any one of claims 1 to 13 **characterised in that** the coupling rod (27) is mounted movably axially between a retracted rest position in which it is in abutment against a shoulder (64) on the spindle (25) and said deployed coupling position.

15. A drive device according to any one of claims 1 to 14 **characterised in that**, in the deployed coupling position of the coupling rod (27), a coupling portion (46) carried by said coupling rod (27) and constituting the operational means (28) on the coupling rod (27) project beyond the support surface (31) of the drive portion (30).

16. A device according to any one of claims 1 to 15 **characterised in that** the control means (32) of the coupling rod (27) are resilient means which continuously urge said coupling rod (27) in the opposite direction to the coupling portion (46) that it carries.

17. A device according to claim 16 **characterised in that** the resilient means forming the control means (32) of the coupling rod (27) are formed by a stack of Belleville washers (67).

18. A device according to any one of claims 1 to 17 **characterised in that** the coupling rod (27) is mounted in the spindle (25) movably both axially and in respect of rotation.

19. A process for using a device (10) according to any one of claims 1 to 18 **characterised in that** the tool (11) to be driven is presented in line with the drive device (10) when the coupling rod (27) thereof is in the deployed position, said tool (11) is displaced axially in the direction of said coupling rod (27) until it can be coupled to said coupling rod (27), and said coupling rod (27) is displaced in the direction of its retracted position until the tool (11) comes to bear against the support surface (31) of the drive portion (30).

20. A process according to claim 19 **characterised in that**, a bayonet fitting being provided between the coupling rod (27) and the tool (11) to be driven, rotation of said coupling rod (27) is effected around the axis (A) of the assembly both prior to the axial displacement of the tool (11) and subsequently to said axial displacement.

21. A process according to either one of claims 19 and 20 **characterised in that**, the control means (32) of the coupling rod (27) being resilient means, a force is axially applied to said coupling rod (27) for the movement thereof from its retracted position to its deployed position and said force is relaxed after coupling of the tool (11) to be driven.

## Patentansprüche

1. Kopplung zwischen einer Antriebseinrichtung und einem Werkzeug (11), wobei die Kopplung umfasst, an dem Werkzeug, einen Stützansatz (14), der mit einer Eingriffseinrichtung (15) versehen ist, geeignet zu dessen Kupplung, und umfassend an der Antriebseinrichtung, eine Spindel (25), die drehbar in einer feststehenden Buchse (26) montiert ist, einen Kupplungsschaft (27), der koaxial in der Spindel (25) angeordnet, axial beweglich in dieser Spindel (25) montiert ist und an seinem freien Ende ausgestattet ist mit einer Eingriffseinrichtung (28), komplementär zu der Eingriffseinrichtung (15), die der Stützansatz (14) des anzutreibenden Werkzeugs (11) umfasst, sowie eine Steuereinrichtung (32), die in der Lage ist, axial auf den Kupplungsschaft (27) einzuwirken und in der Lage ist, eine Anwendung des anzutreibenden Werkzeugs (11) gegen eine Anlagefläche (31) zu ermöglichen, wobei die Kopplung in genereller Weise **dadurch gekennzeichnet ist, dass** sie an der Antriebseinrichtung zusätzlich umfasst ein Antriebsteil (30), welches drehfest mit Bezug auf die Spindel (25) axial auf diese gekeilt in transversaler Richtung die Anlagefläche (31) aufweist, wobei der Schaft eine ausgefahrene Position, Kupplungsposition, einnimmt, in welcher er in der Lage ist eine Kupplung des anzutreibenden Werkzeugs (11) zu ermöglichen.

2. Kopplung nach Anspruch 1, **dadurch gekennzeichnet, dass** die Eingriffseinrichtung (15), die der Stützansatz (14) des anzutreibenden Werkzeugs (11) umfasst, gebildet ist, mittels zweier Zapfen (16), die lateralwärts Rücken an Rücken an dem Stützansatz (14) vorspringen, und die somit geeignet sind für eine Montage vom Bajonett-Montage-Typ, wobei die Eingriffseinrichtung (28), die den Kupplungsschaft (27) ausstattet, gebildet ist durch ein Kupplungsteil (46) in Glockenform, mittels welchem der Kupplungsschaft (27) in der Lage ist in Eingriff gebracht zu werden an dem Stützansatz (14) des anzutreibenden Werkzeugs (11) und lateralwärts Bajonett-Rillen (47) aufweist, zum Zwecke der Wechselwirkung mit den Zapfen (16), die der Stützansatz (14) umfasst.

3. Kopplung nach Anspruch 2, **dadurch gekennzeichnet, dass** das Antriebsteil (30) rückspringend an der Anlagefläche (31) einen Einschnitt (55) aufweist, der sich entlang eines Durchmessers beidseitig der Achse (A) der Anordnung erstreckt.

4. Kopplung nach Anspruch 3, **dadurch gekennzeichnet, dass** der Einschnitt (55) an der Anlagefläche (31) unter einer Aufweitung (56) mündet.

5. Kopplung nach einem der Ansprüche 1 bis 4, **dadurch gekennzeichnet, dass** das Antriebsteil (30), rückspringend an der Anlagefläche (31) und bei einer exzentrischen Position zumindest eine Bohrung (58) umfasst.

6. Kopplung nach Anspruch 5, **dadurch gekennzeichnet, dass** das Antriebsteil (30) zwei Bohrungen (58) umfasst, die bei ein und demselben Durchmesser angeordnet, sich jeweils beidseitig der Achse (A) der Anordnung bei gleichem Abstand diesbezüglich erstrecken.

7. Kopplung nach Anspruch 6, **dadurch gekennzeichnet, dass** die Bohrungen (58) jeweils länglich als Langlöcher ausgebildet sind, gemäß dem Durchmesser entsprechend welchem sie angeordnet sind.

8. Kopplung nach einem der Ansprüche 5 bis 7, **dadurch gekennzeichnet, dass** die Bohrungen (58) entlang einem Durchmesser angeordnet sind, der senkrecht zu jenem ist, entsprechend welchem sich der Einschnitt (55) erstreckt.

9. Kopplung nach den Ansprüchen 3 und 6 gemeinsam, **dadurch gekennzeichnet, dass** das Antriebsteil (30) rückspringend an der Anlagefläche (31) eine Aussparung (59) aufweist, in dessen Kontur sowohl der Einschnitt (55) als auch die Bohrungen (58) eingeschrieben sind.

10. Kopplung nach einem der Ansprüche 1 bis 9, **dadurch gekennzeichnet, dass** das Antriebsteil (30), rückspringend an der Anlagefläche (31), benachbart zu der Peripherie davon eine Rinne (60) aufweist, die sich ringförmig um die Achse (A) der Anordnung erstreckt und in welcher eine Dichtung (62) aufgenommen ist.

11. Kopplung nach einem der Ansprüche 1 bis 10, **dadurch gekennzeichnet, dass** das Antriebsteil (30) ein ringförmiges Teil ist, wobei es mittels seiner zentralen Aussparung (63) in der Lage ist axial zumindest teilweise mit dem Stützansatz (14) des anzutreibenden Werkzeugs (11) in Eingriff zu treten.

12. Kopplung nach den Ansprüchen 2 und 11 gemeinsam, **dadurch gekennzeichnet, dass** das Antriebsteil (30) das Kupplungsteil (46) umgibt.

13. Kopplung nach den Ansprüchen 3 und 11 gemeinsam, **dadurch gekennzeichnet, dass** die mittlere oder zentrale Aussparung (63) des Antriebsteiles (30) den darin ausgebildeten Einschnitt (55) schneidet.

14. Kopplung nach einem der Ansprüche 1 bis 13, **dadurch gekennzeichnet, dass** ein Kupplungsschaft (27) axial beweglich montiert ist zwischen einer eingefahrenen Ruheposition, in welcher er in Anlage gegen einen Absatz (64) der Spindel (25) vorliegt und der ausgefahrenen Kupplungsposition.

15. Kopplung nach einem der Ansprüche 1 bis 14, **dadurch gekennzeichnet, dass** für die ausgefahrene Kupplungsposition des Kupplungsschaftes (27) ein Kupplungsteil (46), gestützt von dem Kupplungsschaft (27) und Bestandteil der Eingriffseinrichtung (28), die den Kupplungsschaft (27) ausstattet über die Anlagefläche (31) des Antriebsteils (30) hinaus vorspringt.

16. Kopplung nach einem der Ansprüche 1 bis 15, **dadurch gekennzeichnet, dass** die Steuereinrichtung (32) des Kupplungsschaftes (27) eine elastische Einrichtung ist, die permanent den Kupplungsschaft (27) in entgegengesetzter Richtung zu dem Kupplungsteil (46), den er trägt, beaufschlagt.

17. Kopplung nach Anspruch 16, **dadurch gekennzeichnet, dass** die elastische Einrichtung die Steuereinrichtung (32) des Kupplungsschaftes (27) ausbildend dargestellt ist durch einen Stapel an Bellville-Scheiben (67).

18. Kopplung nach einem der Ansprüche 1 bis 17, **dadurch gekennzeichnet, dass** der Kupplungsschaft (27) beweglich in der Spindel (25), sowohl in axialer Richtung als auch rotationsmäßig, montiert ist.

19. Verfahren zur Verwendung einer Kopplung (10) nach einem der Ansprüche 1 bis 18, **dadurch gekennzeichnet, dass** man das anzutreibende Werkzeug (11) gegenüber der Antriebseinrichtung (10) anordnet, wobei selbst der Kupplungsschaft (27) davon in der ausgefahrenen Position vorliegen kann, und dass man axial das Werkzeug (11) in der Richtung des Kupplungsschafts (27) versetzt, bis man eine Kupplung mit dem Kupplungsschaft (27) erzielen kann und dass man den Kupplungsschaft (27) in Richtung seiner zurückgezogenen Position versetzt, bis dass das Werkzeug (11) in Anlage gegen die Anlagefläche (31) des Antriebteils (30) gelangt.

20. Verfahren nach Anspruch 19, **dadurch gekennzeichnet, dass** eine Bajonett-Montage vorgesehen ist, zwischen dem Kupplungsschaft (27) und dem anzutreibenden Werkzeug (11), wobei man eine Rotation des Kupplungsschaftes (27) herum um die Achse (A) der Anordnung gewährleistet, und zwar sowohl vorangehend zu der axialen Versetzung des Werkzeugs (11) als auch anschließend an diese axiale Versetzung.

21. Verfahren nach einem der Ansprüche 19, 20, **dadurch gekennzeichnet, dass** die Steuereinrichtung (32) des Kupplungsschaftes (27) eine elastische Einrichtung ist, wobei man eine axiale Kraft auf den Kupplungsschaft (27) ausübt, um den Übergang von seiner zurückgezogenen Position zu seiner ausgefahrenen Position zu veranlassen, wobei man diese Kraft nach der Kupplung des anzutreibenden Werkzeugs (11) löst oder aufhebt.
